# FASCICULE DE BREVET EUROPEEN

(11) **EP 1 514 720 B1**
(45) Date de publication et mention de la délivrance du brevet: **14.01.2009**
(21) Numéro de dépôt: 04292172.6
(22) Date de dépôt: 09.09.2004
(51) Int. Cl.: B60K 37/06

(54) **Procédé de reconnaissance et de commande de fonctions d'un véhicule.**
Verfahren zur Erkennung und Steuerung von Fahrzeugfunktionen
method of recognizing and controlling vehicle functions

(30) Priorité: 09.09.2003 FR 0310624
(43) Date de publication de la demande: 16.03.2005
(73) Titulaire: Delphi Technologies Inc., Troy, Michigan 48007 (US)
(72) Inventeur: Kayser, Hervé, 67640 Fegersheim (FR); Zann, Olivier, 67280 Urmatt (FR)
(74) Mandataire: Robert, Vincent

(56) Documents cités:
- EP-A- 0 893 297
- EP-A- 1 139 365
- FR-A- 2 833 387

## Description

La présente invention se rapporte au domaine technique général de l'automobile ou de tout véhicule motorisé.

L'invention concerne la commande de diverses fonctions du véhicule que l'on peut activer ou désactiver à partir du poste de pilotage du véhicule. Ces fonctions peuvent consister par exemple à piloter un ordinateur de bord, des lève-vitres électriques, sélectionner des stations radio ou différents menus d'un ordinateur de bord, etc... Ces fonctions sont en général commandées via des commutateurs connus en tant que tels ou des leviers de commutation. Les organes de commande connus présentent cependant l'inconvénient de na pas tous être disposés dans le sens visuel du conducteur lorsque ce dernier se déplace avec le véhicule. En effet, le champ visuel du conducteur englobe en particulier la route, les alentours de celle-ci, et ce à des fins de sécurité. Il est donc très difficile de disposer l'ensemble des organes de commande (commutateurs ou leviers) dans son champ visuel de manière à ce que le conducteur n'ait pas à détourner ses yeux de la route tout en manipulant lesdits organes ou commutateurs. Lorsque le conducteur détourne ses yeux de son champ visuel de sécurité, sa sécurité ou celle des autres usagers de la route est largement compromise.

On connaît des procédés de commande pour sélectionner et activer / désactiver des fonctions d'un véhicule motorisé consistant :
-a- pour l'utilisateur à venir en contact avec au moins un organe de commande, pilotant une ou plusieurs fonctions,
-b- à détecter par l'organe de commande un contact ou un actionnement de l'utilisateur,
-c- à activer un moyen d'identification de l'organe de commande dont l'activation est perceptible par l'utilisateur,
-d- et à piloter l'activation ou la désactivation totale ou partielle de la ou des fonctions.

Un tel procédé est par exemple décrit dans le document FR-A-2 833 387.

Le but de la présente invention vise à augmenter la sécurité d'utilisation du véhicule en permettant au conducteur de ne pas détourner les yeux de son champ visuel de sécurité lorsqu'il manipule différents organes de commande. Le but est donc de maintenir la vigilance du conducteur intacte tout en manipulant l'organe de commande dont la disposition n'est pas optimale sur le plan de la sécurité.

Selon l'invention, le procédé de commande consiste à rendre accessible un ou plusieurs organes de commande déterminés, par un déplacement spécifique d'un mécanisme de commande, en entraînant le ou les organes de commande d'une position inactive escamotée vers une position active en saillie du mécanisme de commande, et à identifier au toucher le ou les organes de commande par un profil particulier à chaque organe de commande en saillie sur le mécanisme de commande ou par la localisation sur le mécanisme de commande du ou des organes de commande en contact avec l'utilisateur.

L'utilisateur peut ainsi sélectionner des fonctions sans contrôle visuel de la manipulation et sans consulter un écran spécifique.

Selon un exemple de mise en oeuvre, le procédé consiste à attribuer un moyen d'identification spécifique à chaque fonction accessible par le ou les organes de commande.

Selon un exemple de mise en oeuvre, le procédé consiste à détecter le contact par voie capacitive.

Selon un exemple de mise en oeuvre, le procédé consiste à émettre un signal d'identification du type vibratoire ou impulsionnel.

Selon un exemple de mise en oeuvre, le procédé consiste à actionner un commutateur pour piloter l'activation et / ou la désactivation de la ou des fonctions identifiées par l'utilisateur.

Selon un exemple de mise en oeuvre, le procédé consiste à comparer la durée de contact avec une durée seuil correspondant au temps nécessaire à l'activation du moyen d'identification et à la reconnaissance de la part de l'utilisateur dudit moyen d'identification pour activer ou désactiver la ou les fonctions.

Selon un exemple de mise en oeuvre, le procédé consiste à déplacer les organes de commande correspondants, les entraînant d'une position inactive escamotée, vers une position active en saillie du mécanisme de commande.

Selon un exemple de mise en oeuvre, le procédé consiste à identifier le ou les organes de commande par localisation et leur position en saillie sur le mécanisme de commande.

Le mécanisme de commande peut ainsi présenter des zones de contact spécifiques pour les doigts de l'utilisateur, dont chacun peut se voir attribuer le rôle d'actionner des fonctions correspondantes.

Selon un exemple de mise en oeuvre, le procédé consiste à identifier le ou les organes de commande par un profil particulier à chaque organe de commande en saillie sur le mécanisme de commande et identifiable au toucher.

Selon un exemple de mise en oeuvre, le procédé consiste à générer le signal vibratoire par voie piézoélectrique.

Selon un exemple de mise en oeuvre, le procédé consiste à attribuer à au moins une des fonctions, un signal d'identification modulable selon l'état ou le degré d'activation de ladite fonction, rendant ce degré ou cet état d'activation identifiable par l'utilisateur.

Selon un exemple de mise en oeuvre, le procédé de commande conforme à l'invention consiste à reconnaître le degré ou le niveau d'actionnement ou de fonctionnement, par un profil variable, en saillie sur au moins un organe de commande.

La présente invention concerne également un véhicule motorisé équipé d'un dispositif pour mettre en oeuvre le procédé décrit ci-dessus. D'autres caractéristiques et avantages ressortiront également de la description détaillée figurant ci-après en référence aux dessins non limitatifs annexés à titre d'exemple dans lesquels :
- La figure 1 est une représentation fonctionnelle d'un exemple de mise en oeuvre du procédé conforme à l'invention.
- La figure 2 est une variante de mise en oeuvre du procédé conforme à l'invention.
- La figure 3 est un exemple de réalisation d'un dispositif permettant de mettre en oeuvre le procédé conforme à l'invention.
- La figure 4 est un détail de la figure 3.

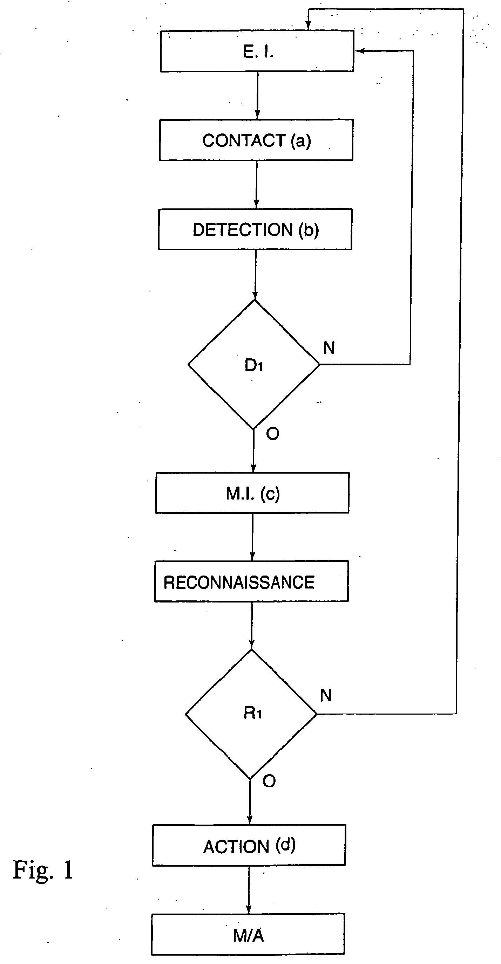

Le procédé de commande conforme à l'invention permet de sélectionner d'activer / désactiver des fonctions d'un véhicule motorisé selon une étape (a). Le procédé consiste pour l'utilisateur à venir en contact avec au moins un organe de commande pilotant une ou plusieurs fonctions ou à actionner ledit organe de commande. Partant ainsi d'un état initial (Ei), dans lequel les différentes fonctions sont désactivées ou en état de veille, on met en oeuvre l'étape (a). On pourra se référer par exemple à la figure 1.

Le procédé consiste ensuite à détecter selon l'étape (b) à l'aide de moyens appropriés associés à l'organe de commande, un contact ou un actionnement.

Selon le procédé, si aucun contact ou aucun actionnement n'est détecté lors de la détection (D1), on revient à l'état initial (Ei). En cas de détection d'un contact ou d'un actionnement, le procédé consiste selon l'étape (c) à activer un moyen d'identification de l'organe de commande dont l'activation est perceptible par l'utilisateur. L'activation de ce moyen d'identification (Mi) permet d'informer le conducteur qu'il est en train de manipuler un organe de commande et de reconnaître ce dernier sans contact visuel. Lorsque plusieurs organes de commande sont utilisés, chacun est associé à une identification spécifique le différenciant des autres organes de commande.

Le procédé consiste par l'utilisateur ensuite à reconnaître l'organe de commande manipulé et par conséquent la ou les fonction(s) qu'il pilote. Selon cette étape de reconnaissance (R1), lorsque l'organe de commande qu'il convient d'activer pour commander la fonction choisie n'est pas reconnu par l'utilisateur on revient à l'état initial (Ei). L'utilisateur peut par exemple interrompre le contact de l'organe de commande ou la manipulation du mécanisme de commande pour revenir à l'état initial (Ei).

En cas de reconnaissance de l'organe de commande, on passe à l'étape (d) consistant à piloter l'activation ou la désactivation de la ou des fonction(s) sélectionnée(s) et associée(s) à l'organe de commande manipulé. On commande ainsi l'état de marche ou d'arrêt d'une ou plusieurs fonctions. Dans un exemple de mise en oeuvre on peut prévoir de commander un accroissement ou une diminution d'un paramètre de fonctionnement, dont l'ampleur est déterminée par la durée de contact entre le doigt de l'utilisateur et l'organe de commande. On peut ainsi commander une climatisation, une ventilation, une température, un volume sonore ou une autre fonction d'un véhicule.

Le procédé conforme à l'invention constitue ainsi une aide à la sélection d'une ou de différentes fonctionnalités d'un véhicule. Un avantage lié à l'invention est obtenu par une mise en oeuvre facile des fonctions ne nécessitant aucun contact visuel avec les organes de commande ou avec des écrans spécifiques. Une phase d'apprentissage suffit pour que l'utilisateur reconnaisse les différents moyens d'identification.

Il est possible de réaliser des organes de commande identiques dans leur forme, leur différenciation se faisant grâce aux moyen d'identification propre à chaque organe de commande.

Selon un exemple de mise en oeuvre, le procédé consiste à attribuer un moyen d'identification spécifique à chaque fonction accessible par le ou les organe(s) de commande. On obtient ainsi une grande liberté dans la conception du poste de pilotage du véhicule. En effet, il est possible d'envisager qu'un organe de commande permette d'activer ou de désactiver une ou plusieurs fonction(s) différente(s) dépendant de différents paramètres de fonctionnement du véhicule. Il est envisagé selon un exemple de mise en oeuvre du procédé, de rassembler des fonctions pilotant par exemple la ventilation, la climatisation, la température, et la circulation du flux d'air sous un même organe de commande. On peut procéder de la même façon pour piloter un lève-vitres électrique, la position des rétroviseurs, et des sièges.

A titre d'exemple, le procédé consiste à détecter (étape b) le contact ou l'actionnement d'un organe d'au moins un organe de commande par voie capacitive.

Selon un exemple de mise en oeuvre, le procédé consiste à émettre un signal d'identification sous l'étape (c) du type vibratoire ou impulsionnel. Un tel signal vibratoire est obtenu par exemple par voie piézoélectrique. L'activation d'un moyen d'identification (Mi) consiste ainsi à faire vibrer un support en contact avec la main ou le doigt de l'utilisateur du conducteur du véhicule. Le signal d'identification peut être réalisé à fréquence fixe, fréquence variable ou par émission de trains d'ondes. Toute configuration de signal est envisageable dans la mesure où elle peut être perçue par l'utilisateur de façon tactile et différenciée par rapport à d'autres signaux du même type.

Il est ainsi possible, selon un exemple de mise en oeuvre de procédé conforme à l'invention, de réaliser un organe de commande par exemple longiligne, dont le signal vibratoire constituant le moyen d'identification, présente une fréquence différente en fonction de la localisation du contact établi par l'utilisateur. Un signal vibratoire dont le fréquence varie en fonction de la position permet ainsi de réaliser un curseur de commande capacitif ne comportant aucune pièce mécanique se déplaçant l'une par rapport à l'autre. Le curseur de commande permet ainsi d'informer l'utilisateur, grâce au signal tactile reconnu par ce dernier, sur l'état ou le degré d'activation d'une fonction. A titre d'exemple, un signal vibratoire de fréquence élevée peut correspondre à une température de consigne élevée et une fréquence vibratoire basse peut correspondre à une température de consigne basse. Différents paliers de température peuvent ainsi être reconnus par l'utilisateur.

Selon un exemple de mise en oeuvre, le procédé consiste à actionner un commutateur pour piloter l'activation et / ou la désactivation de la ou des fonction(s) identifiée(s) par l'utilisateur. On pourra se reporter à la figure 1, laquelle se rapporte à l'exemple de mise en oeuvre dans lequel l'utilisateur, après reconnaissance de l'organe de commande, procède à une action mécanique sur un bouton de commutation selon l'étape (d). Cette étape peut par exemple être mise en oeuvre à l'aide de l'élément piézoélectrique utilisé pour les moyens d'identification ou à l'aide d'un élément piézoélectrique additionnel.

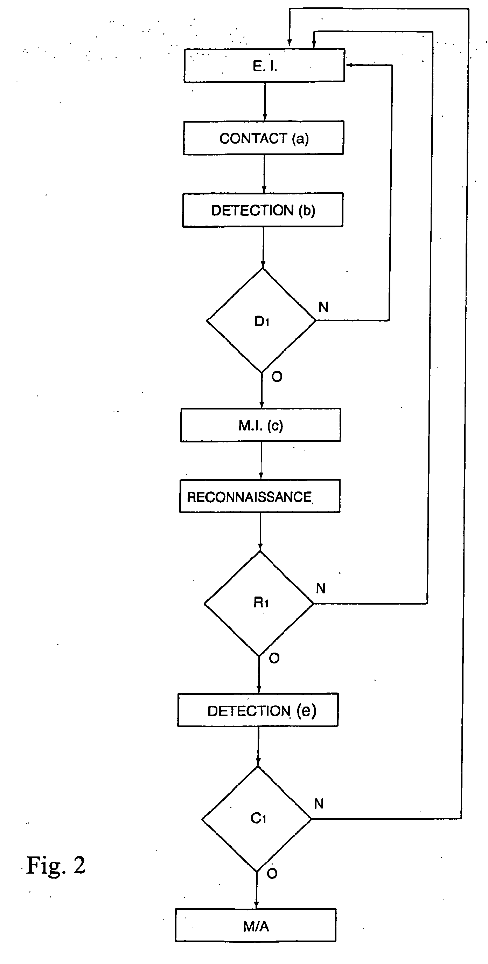

Selon un autre exemple de mise en oeuvre du procédé conforme à l'invention, schématisé par exemple à la figure 2, on compare la durée de contact de l'utilisateur avec l'organe de commande avec une durée seuil correspondant au temps nécessaire à l'activation des moyens d'identification et à la reconnaissance de la part de l'utilisateur dudit moyen d'identification pour activer ou désactiver la ou les fonction(s). On procède ainsi, après la reconnaissance R1, à une détection complémentaire sous l'étape (e) au cours de laquelle on compare, suivant une comparaison C1, la durée de contact avec une durée seuil préenregistrée. En cas de dépassement de cette durée, on active ou on désactive la ou les fonction(s) correspondant à l'étape de marche / arrêt, schématisée à la figure 2. En cas de non dépassement de cette durée seuil, on revient à l'état initial (Ei) signifiant que l'utilisateur, après avoir reconnu l'organe de commande qu'il est en train de manipuler, ne souhaite pas activer ou désactiver la ou les fonction(s) correspondante(s) ou tout simplement conserver le degré d'activation de ladite fonction, après avoir reconnu ce dernier.

La seconde détection sous l'étape (e) s'effectue par exemple également par voie capacitive.

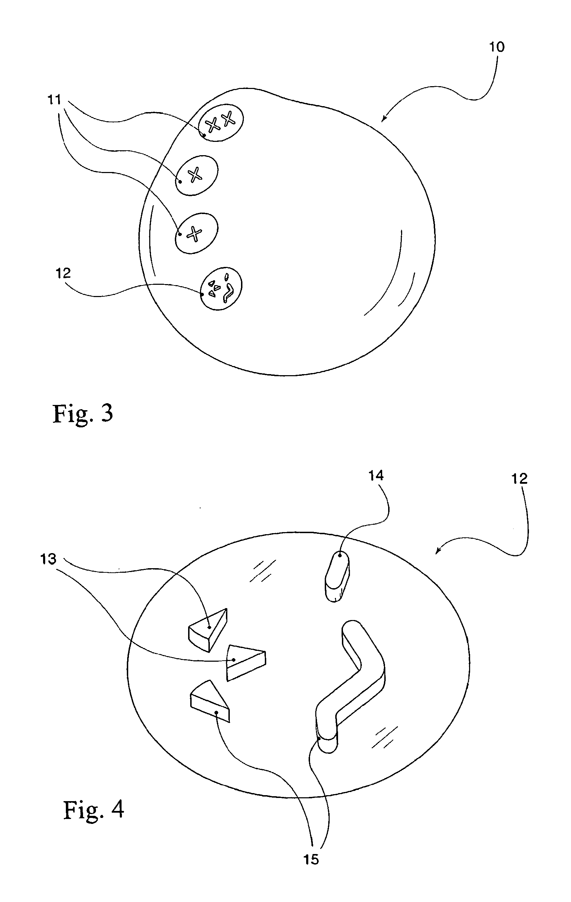

Selon un autre exemple de mise en oeuvre du procédé conforme à l'invention, ce dernier consiste à rendre accessible un ou plusieurs organe(s) de commande déterminé(s) par un déplacement spécifique d'un mécanisme de commande. Dans cet exemple de réalisation dont un exemple est représenté aux figures 3 et 4, le procédé consiste à déplacer les organes de commande correspondant en les entraînant d'une position inactive escamotée vers une position active en saillie du mécanisme de commande. Ce dernier se présente par exemple sous forme de souris (10) déplaçable par translation et / ou par rotation, dont chaque position détermine et entraîne en saillie le ou les organe(s) de commande (11, 12) susceptible(s) d'être actionné(s).

L'utilisateur peut ainsi identifier par simple contact le ou les organe(s) de commande par leur localisation et leur position en saillie sur la souris (10). L'utilisateur peut par exemple identifier le ou les organe(s) de commande par un profil particulier à chaque organe de commande en saillie sur le mécanisme de commande identifiable au toucher. Les zones de contact sur la souris 10, permettant le positionnement des doigts de l'utilisateur, sont par exemple matérialisés par de légers renfoncements ou par des parties concaves adaptées à la forme des doigts.

La différenciation de ou des organe(s) de commande peut par exemple se faire grâce à une sélection d'éléments (13, 14, 15) venant en saillie d'un organe de commande (12), laquelle permet de réaliser une forme ou une configuration identifiable au toucher. La sélection d'autres éléments constitutifs de l'organe de commande venant en saillie du mécanisme de commande dans une autre position permet de constituer une configuration différente dont la forme est identifiable par l'utilisateur, lequel est ensuite à même de la différencier de la forme précédente correspondant à la première sélection. On pourra se référer par exemple à la représentation de la figure 3 ou 4.

A titre d'exemple, l'organe de commande (12) peut se rapporter à la ventilation et une modification de l'orientation de la souris (10) entraîne la venue en saillie des éléments (13) et l'escamotage de l'élément (15). Une telle sélection, identifiable au toucher permet de privilégier un flux d'air dirigé vers le haut.

A l'inverse, une orientation différente de la souris (10) entraîne l'élément (15) en saillie et les éléments (13) dans leur position escamotée, favorisant ainsi un flux d'air dirigé vers le bas.

Selon un mode de mise en oeuvre du procédé, ce dernier consiste consécutivement à une reconnaissance (R1) de l'organe de commande venant en saillie du mécanisme de commande, à comparer la durée de contact de l'utilisateur avec ledit organe de commande avec une durée seuil correspondant au temps nécessaire à l'activation de moyens d'identification et à la reconnaissance de la part de l'utilisateur dudit moyen d'identification pour activer ou désactiver la ou les fonction(s). Les organes de commande sont ainsi détectés et reconnus de façon tactile par l'utilisateur et, une fois l'identification ou la reconnaissance effectuée, l'utilisateur maintient ou non un contact avec ledit organe de commande, correspondant respectivement à sa décision d'activer ou de désactiver la fonction. Cette dernière option consiste à revenir à l'état initial (Ei), dans laquelle la ou les fonction(s) sélectionnée(s) sont soit désactivée(s) soit déjà activée(s). Le maintient ou non d'un contact de la part de l'utilisateur peut également correspondre respectivement à la décision d'augmenter ou de diminuer le degré d'activation d'une fonction du type changement de position de siège ou autre.

L'activation, la désactivation, la diminution ou l'augmentation du degré d'activation de la fonction se fait ainsi par voie capacitive pour mettre en oeuvre l'étape (d).

Selon un autre exemple de mise en oeuvre du procédé, l'étape (d) consiste à manipuler un organe du type interrupteur constitué par exemple par un symbole défini à l'aide des éléments (13, 14, 15) en saillie, un bouton spécifique, ou à manipuler la souris (10). Cette dernière est par exemple déplaçable dans une première direction correspondant à une activation ou à une augmentation du degré d'activation de la fonction, et dans une seconde direction correspondant à une désactivation ou à une diminution du degré d'activation de ladite fonction.

Il est possible également, sans sortir du cadre de l'invention, d'associer divers moyens d'identification ou de reconnaissance décrits précédemment. On peut par exemple envisager d'attribuer la reconnaissance d'une fonction à la localisation d'un organe de commande sur le mécanisme de commande et le degré d'activation à un signal d'identification du type vibratoire ou impulsionnel. D'autres combinaisons ou associations sont également envisageables dans le cadre de l'invention.

## Revendications

1. Procédé de commande permettant de sélectionner et activer / désactiver des fonctions d'un véhicule motorisé consistant :
-a- pour l'utilisateur à venir en contact avec au moins un organe de commande (11, 2), pilotant une ou plusieurs fonctions,
-b- à détecter par l'organe de commande un contact (11, 12) ou un actionnement, de l'utilisateur,
-c- à activer un moyen d'identification de l'organe de commande dont l'activation est perceptible par l'utilisateur,
-d- à piloter l'activation ou la désactivation totale ou partielle de la ou des fonctions,
**caractérisé en ce qu'**il consiste à rendre accessible un ou plusieurs organes de commande (11, 12) déterminés par un déplacement spécifique d'un mécanisme de commande (10), en les entraînant d'une position inactive escamotée vers une position active en saillie du mécanisme de commande (10), et à identifier au toucher le ou les organes de commande (11, 12) par un profil particulier (13, 14, 15) à chaque organe de commande (11, 12) en saillie sur le mécanisme de commande (10) ou par la localisation sur le mécanisme de commande (10) du ou des organes de commande (11, 12) en contact avec l'utilisateur.

2. Procédé de commande selon la revendication 1, consistant à attribuer un moyen d'identification spécifique à chaque fonction accessible par le ou les organes de commandes (11,12).

3. Procédé de commande selon la revendication 1 ou 2, consistant à détecter le contact sous (b) par voie capacitive.

4. Procédé de commande selon l'une quelconque des revendications 1 à 3, consistant à émettre un signal d'identification sous (c) du type vibratoire ou impulsionnel.

5. Procédé de commande selon l'une quelconque des revendications 1 à 4, consistant à actionner un commutateur pour piloter l'activation et / ou la désactivation de la ou des fonctions identifiées par l'utilisateur.

6. Procédé de commande selon l'une quelconque des revendications 1 à 4, consistant à comparer la durée de contact avec une durée seuil correspondant au temps nécessaire à l'activation du moyen d'identification et à la reconnaissance de la part de l'utilisateur dudit moyen d'identification pour activer ou désactiver la ou les fonctions.

7. Procédé de commande selon l'une quelconque des revendications 1 à 6 consistant à reconnaître le degré ou le niveau d'activation d'une fonction pilotée par l'organe de commande (11, 12).

8. Procédé de commande selon la revendication 4 consistant à attribuer à au moins une fonction un signal d'identification modulable selon l'état ou le degré d'activation de ladite fonction, rendant ce degré ou cet état identifiable par l'utilisateur.

9. Procédé de commande selon la revendication 7, **caractérisé en ce qu'**il consiste à reconnaître le degré ou le niveau d'actionnement ou de fonctionnement par un profil variable (13, 14, 14), en saillie sur au moins un organe de commande (11, 12).

10. Véhicule motorisé équipé d'un dispositif pour mettre en oeuvre le procédé de commande conforme à l'une quelconque des revendications 1 à 8.

## Claims

1. Control method making it possible to select and activate /deactivate functions of a motor vehicle, consisting of:
a) for the user, coming into contact with at least one control member (11, 2), driving one or more functions,
b) detecting by the control member a contact (11, 12) or an operation of the user,
c) activating a means of identification of the control member of which the activation is perceptible by the user,
d) driving partial or complete activation or deactivation of the function or functions,
**characterised in that** it consists of rendering accessible one or more control members (11, 12) determined by specific displacement of a control mechanism (10), by driving them from a retracted inactive position to a projecting active position of the control mechanism (10), and identifying by touch the control member or members (11, 12) by a profile (13, 14, 15) peculiar to each control member (11, 12) projecting from the control mechanism (10) or by location on the control mechanism (10) of the control member or members (11, 12) in contact with the user.

2. Control method according to claim 1, consisting of attributing a means of identification specific to each function accessible by the control member or members (11, 12).

3. Control method according to claim 1 or 2, consisting of detecting the contact in (b) capacitively.

4. Control method according to any of claims 1 to 3, consisting of emitting an identification signal in (c) of the vibratory or pulsed type.

5. Control method according to any of claims 1 to 4, consisting of actuating a switch for driving activation and/or deactivation of the function or functions identified by the user.

6. Control method according to any of claims 1 to 4, consisting of comparing the contact time with a threshold time corresponding to the time necessary for activation of the identification means and for recognition by the user of said identification means for activating or deactivating the function or functions.

7. Control method according to any of claims 1 to 6, consisting of recognising the degree or level of activation of a function driven by the control member (11, 12).

8. Control method according to claim 4, consisting of attributing to at least one function an identification signal which can be modulated according to the state or degree of activation of said function, rendering this degree or this state identifiable by the user.

9. Control method according to claim 7, **characterised in that** it consists of recognising the degree or level of actuation or functioning by a variable profile (13, 14, 14), projecting from at least one control member (11, 12).

10. Motor vehicle equipped with a device for carrying out the control method according to any of claims 1 to 8.

## Patentansprüche

1. Steuerverfahren, mit dem Funktionen eines Kraftfahrzeugs gewählt und aktiviert/deaktiviert werden können und das die folgenden Schritte beinhaltet:
a) Kontaktieren wenigstens eines Bedienelementes (11, 2) durch den Benutzer, um eine oder mehrere Funktionen zu bedienen,
b) Erkennen eines Kontakts oder einer Betätigung durch den Benutzer anhand des Bedienelementes (11, 12),
c) Aktivieren eines Identifikationsmittels des Bedienelementes, wobei die Aktivierung für den Benutzer erkennbar ist,
d) Bewirken der völligen oder teilweisen Aktivierung oder Deaktivierung der Funktion(en),
**dadurch gekennzeichnet, dass** es die folgenden Schritte beinhaltet: Zugängigmachen von einem oder mehreren Bedienelementen (11, 22), erkennbar an einer bestimmten Verschiebung eines Steuermechanismus (10) durch Bringen des Steuermechanismus (10) von einer eingefahrenen inaktiven Position in eine ausgefahrene aktive Position, und Identifizieren durch Berühren des/der Bedienelemente(s) (11, 12) anhand eines bestimmten Profils (13, 14, 15) an jedem ausgefahrenen Bedienelement (11, 12) auf dem Steuermechanismus (10) oder anhand des Ortes des oder der Bedienelemente(s) (11, 12) auf dem Steuermechanismus (10) in Kontakt mit dem Benutzer.

2. Steuerverfahren nach Anspruch 1, das den Schritt des Zuordnens eines speziellen Identifikationsmittels zu jeder zugängigen Funktion durch das oder die Bedienelement(e) (11, 12) beinhaltet.

3. Steuerverfahren nach Anspruch 1 oder 2, das den Schritt des Erfassens des Kontakts gemäß b) auf kapazitivem Weg beinhaltet.

4. Steuerverfahren nach einem der Ansprüche 1 bis 3, das den Schritt des Aussendens eines vibrations- oder impulsartigen Identifikationssignals gemäß c) beinhaltet.

5. Steuerverfahren nach einem der Ansprüche 1 bis 4, das den Schritt des Betätigens eines Kommutators zum Bewirken der Aktivierung und/oder Deaktivierung der vom Benutzer identifizierten Funktion(en) beinhaltet.

6. Steuerverfahren nach einem der Ansprüche 1 bis 4, das den Schritt des Vergleichens der Kontaktdauer mit einer Schwellendauer beinhaltet, die der Zeit entspricht, die zum Aktivieren des Identifikationsmittels und zum Erkennen des genannten Identifikationsmittels zum Aktivieren oder Deaktivieren der Funktion(en) seitens des Benutzers nötig ist.

7. Steuerverfahren nach einem der Ansprüche 1 bis 6, das den Schritt des Erkennens des Grades oder Niveaus der Aktivierung einer durch das Bedienelement (11, 12) bewirkten Funktion beinhaltet.

8. Steuerverfahren nach Anspruch 4, das den Schritt des Zuordnens eines Identifikationsmittels, das gemäß dem Zustand oder dem Grad der Aktivierung der genannten Funktion veränderlich ist, zu wenigstens einer Funktion beinhaltet, wobei dieser Grad oder dieser Zustand für den Benutzer identifizierbar gemacht wird.

9. Steuerverfahren nach Anspruch 7, **dadurch gekennzeichnet, dass** es den Schritt des Erkennens des Grades oder des Niveaus der Betätigung oder des Betriebs anhand eines variablen ausgefahrenen Profils (13, 14, 14) an wenigstens einem Bedienelement (11, 12) beinhaltet.

10. Kraftfahrzeug, das mit einer Vorrichtung zum Ausführen des Steuerverfahrens nach einem der Ansprüche 1 bis 8 ausgestattet ist.
